# EUROPEAN PATENT APPLICATION

(11) **EP 3 855 353 A2**
(43) Date of publication of application: **28.07.2021**
(21) Application number: 21174603.7
(22) Date of filing: 19.05.2021
(51) Int. Cl.: G06K 9/00

(54) **IMAGE TABLE EXTRACTION METHOD AND APPARATUS, ELECTRONIC DEVICE, AND STORAGE MEDIUM**

(30) Priority: 12.06.2020 CN 202010538176
(71) Applicant: BEIJING BAIDU NETCOM SCIENCE TECHNOLOGY CO., LTD., No.10 Shangdi 10th Street Haidian District Beijing 100085 (CN)
(72) Inventor: HUANG, Xiangkai, Beijing (CN); LI, Qiaoyi, Beijing (CN); LI, Yulin, Beijing (CN); HUANG, Ju, Beijing (CN); QIN, Duohao, Beijing (CN); QIN, Xiameng, Beijing (CN); LIU, Minghao, Beijing (CN); HAN, Junyu, Beijing (CN); GUO, Jiangliang, Beijing (CN)
(74) Representative: J A Kemp LLP

(57) **Abstract**

Embodiments of the present application disclose an image table extraction method and apparatus, an electronic device, a storage media, and a training method for a table extraction model, which relate to the field of artificial intelligence technologies and cloud computing technologies, including: acquiring an image to be processed; generating a table of the image to be processed according to a table extraction model, where the table extraction model is obtained according to a field position feature, an image feature, and a text feature of a sample image; and filling text information of the image to be processed into the table. On one hand, a positional association relationship among respective fields may be determined through the field position feature, it is applicable to an image with a table having at least some dotted line boxes, thereby achieving technical effects of improving flexibility and universality of table recognition; on the other hand, due to a full consideration of the field position feature, the image feature and the text feature, that is, multiple dimensional features can be obtained through analysis of the image to be processed from multiple dimensions, thereby it is possible to achieve technical effects of improving accuracy and reliability of table recognition.

## Description

### TECHNICAL FIELD

Embodiments of the present application relate to the field of image processing technologies, in particular, to the field of artificial intelligence technologies, and specifically to an image table extraction method and apparatus, an electronic device, a storage media, and a training method for a table extraction model.

### BACKGROUND

In the prior art, a main method used to extract a table from an image is: extracting a table box, extracting an area within the box according to the table box, and performing optical character recognition (Optical Character Recognition, OCR) on the image of the area within the box to extract the table.

However, during implementation of the present application, inventors found at least the following problem: when the table has no box line or the table has incomplete box lines, there will be a problem of low accuracy if the table is generated by means of extracting the table box.

### SUMMARY

Provided are an image table extraction method and apparatus, an electronic device, a storage media, and a training method for a table extraction model which are used for solving low accuracy.

According to a first aspect, provided is an image table extraction method, including:
acquiring an image to be processed;
generating a table of the image to be processed according to a table extraction model, where the table extraction model is obtained according to a field position feature, an image feature, and a text feature of a sample image; and
filling text information of the image to be processed into the table.

In an embodiment of the present application, on one hand, a positional association relationship among respective fields may be determined through the field position feature, it is thus applicable to an image with a table having at least some dotted line boxes, thereby achieving technical effects of improving flexibility and universality of table recognition; on the other hand, due to a full consideration of the field position feature, the image feature and the text feature, that is, multiple dimensional features can be obtained through analysis of the image to be processed from multiple dimensions, thereby it is possible to achieve technical effects of improving accuracy and reliability of table recognition.

According to a second aspect, an embodiment of the present application provides an image table extraction apparatus, including:
an acquiring module, configured to acquire an image to be processed;
a first generating module, configured to generate a table of the image to be processed according to a table extraction model, where the table extraction model is obtained according to a field position feature, an image feature, and a text feature of a sample image; and
a filling module, configured to fill text information of the image to be processed into the table.

According to a third aspect, an embodiment of the present application provides an electronic device, including:
at least one processor; and
a memory communicatively connected to the at least one processor;
where the memory is stored with an instruction executable by the at least one processor, and the instruction is executed by the at least one processor to enable the at least one processor to execute the method according to any one of the embodiments above.

According to a fourth aspect, an embodiment of the present application provides a non-transitory computer readable storage medium stored with a computer instruction, where the computer instruction is configured to enable a computer to execute the method according to any one of the embodiments above.

According to a fifth aspect, an embodiment of the present application provides a training method for a table extraction module, including:
recognizing an acquired sample image to obtain image recognition information, where the sample image includes a table;
generating a field position feature, an image feature, and a text feature according to the image recognition information; and
generating a table extraction model according to the field position feature, the image feature, the text feature and a preset predicted true value.

According to the technologies in the present application pertaining to: acquiring an image to be processed; generating a table of the image to be processed according to a table extraction model, where the table extraction model is obtained according to a field position feature, an image feature, and a text feature of a sample image; and filling text information of the image to be processed into the table, the problem of poor flexibility and low accuracy of table extraction in related technologies is solved. On one hand, a positional association relationship among respective fields may be determined through the field position feature, it is thus applicable to an image with a table having at least some dotted line boxes, thereby achieving technical effects of improving flexibility and universality of table recognition; on the other hand, due to a full consideration of the field position feature, the image feature and the text feature, that is, multiple dimensional features can be obtained through analysis of the image to be processed from multiple dimensions, thereby it is possible to achieve technical effects of improving accuracy and reliability of table recognition.

It should be understood that the content described in this section is not intended to identify a key or important feature in an embodiment of present disclosure, nor is it intended to limit the scope of the present disclosure. Other features of the present disclosure will become readily comprehensible with the following description.

### □ BRIEF DESCRIPTION OF DRAWINGS

The accompanying drawings are used to better understand the present solution, but do not constitute a limitation to the present application. Among them:
FIG. 1 is a schematic diagram of an application scenario of an image table extraction method according to an embodiment of the present application;
FIG. 2 is a flow diagram of the image table extraction method according to an embodiment of the present application;
FIG. 3 is a flow diagram of the image table extraction method according to another embodiment of the present application;
FIG. 4 is a flow diagram of the image table extraction method according to another embodiment of the present application;
FIG. 5 is a schematic diagram of a sample image according to an embodiment of the present application;
FIG. 6 is a schematic diagram of two probability matrices according to an embodiment of the present application;
FIG. 7 is a schematic diagram of an image table extraction apparatus according to an embodiment of the present application;
FIG. 8 is a schematic diagram of the image table extraction apparatus according to another embodiment of the present application;
FIG. 9 is a block diagram of an electronic device provided by an embodiment of the present application; and
FIG. 10 is a flow diagram of a training method for a table extraction model according to an embodiment of the present application.

### DESCRIPTION OF EMBODIMENTS

Embodiments which are exemplary to the embodiments of the present application will be described hereunder with reference to the accompanying drawings, which include therein various details of the embodiments of the present application to facilitate understanding, and should be considered as to be merely exemplary. Therefore, those of ordinary skill in the art should realize that various changes and modifications can be made to the embodiments described herein without departing from the scope and spirit of the embodiments of the present application. Likewise, for clarity and conciseness, descriptions of well-known functions and structures are omitted in the following description.

The image table extraction method according to the embodiment of the present application may be applied to a scenario where a terminal device converts a table in an image format into a table in a storage format. Among them, the table in the storage format is configured to characterize a table in an editable form.

The terminal device may be a wireless terminal or a wired terminal. The wireless terminal may refer to a device providing voice and/or other service data connectivity to a user, a handheld device with a wireless connection function, or other processing device connected to a wireless modem. The wireless terminal may communicate with one or more core network devices via a radio access network (Radio Access Network, RAN for short). The wireless terminal may be a mobile terminal such as a mobile phone (or referred to as a "cellular" phone) and a computer having the mobile terminal, which may be a portable, pocket, handheld, computer built-in or vehicle-mounted mobile device, for example, and they exchange a voice and/or data with the radio access network. For another example, the wireless terminal may also be a personal communication service (Personal Communication Service, PCS for short) phone, a cordless phone, a session initiation protocol (Session Initiation Protocol, SIP for short) phone, a wireless local loop (Wireless Local Loop, WLL for short) station, a personal digital assistant (Personal Digital Assistant, PDA for short) or other device. The wireless terminal may also be known as a system, a subscriber unit (Subscriber Unit), a subscriber station (Subscriber Station), a mobile station (Mobile Station), a mobile platform (Mobile), a remote station (Remote Station), a remote terminal (Remote Terminal), an access terminal (Access Terminal), a user terminal (User Terminal), a user agent (User Agent), or a user device (User Device or User Equipment), which is not limited here. Optionally, the above terminal device may also be a smart watch, a tablet computer, or other device.

In order to enable readers to more clearly understand an application scenario of an image table extraction method according to an embodiment of the present application, a desktop computer is used as an example for the terminal device, the application scenario of the image table extraction method according to the embodiment of the present application will be elaborated in detail.

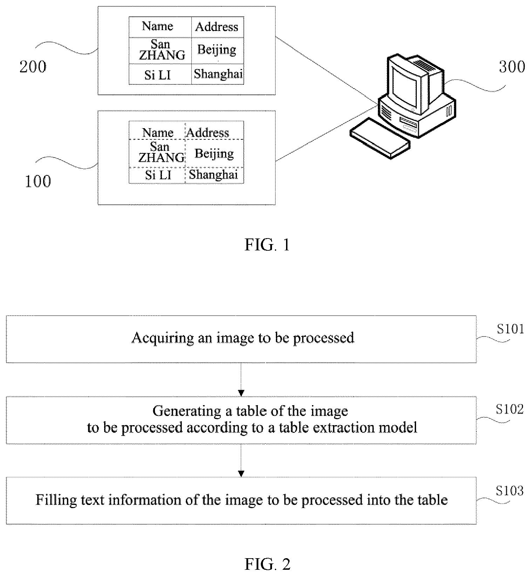

With reference to FIG. 1, it is a schematic diagram of an application scenario of an image table extraction method according to an embodiment of the present application.

As shown in FIG. 1, the image may be an image 100 including a table with dotted line boxes shown in FIG. 1, or an image 200 including a table with solid line boxes shown in FIG. 1.

A desktop computer 300 executes the image table extraction method according to the embodiment of the present application, and extracts the table in the image (the image 100 including the table with the dotted line boxes and the image 200 including the table with the solid line boxes) to obtain a table in a storage format. A user may perform operations such as editing on the table in the storage format.

Among them, images with two types of table are exemplarily shown in FIG. 1, one is an image including a table with dotted line boxes, and the other is an image including a table with solid line boxes. Certainly, the image table extraction method according to the embodiment of the present application can also be used for an image that includes a table with some dotted line boxes, and so on.

It is worth noting that the above examples are only used to exemplarily illustrate the scenario to which the image table extraction method according to the embodiment of the present application is applicable, but cannot be construed as limitations to the application scenario of the image table extraction method according to the embodiment of the present application.

In related technologies, image morphological processing approaches, such as edge detection and line detection, and so on, are generally used to extract box lines of a table so as to obtain a table in a storage format.

However, since the table in the storage format which is obtained by extracting the box lines of the table in the related technologies can target at only an image with a solid-line table, there is a problem of low applicability and poor flexibility.

In order to solve the above problem, the inventors of the present application came up with the inventive concept of the embodiments of the present application through creative efforts: in combined consideration with position features of respective fields of an image, a table extraction model is generated based on the position features of the respective fields, and a table in the image is extracted by the table extraction model.

Detailed description will be made hereunder with specific embodiments in respect of technical solutions of the present application and how to solve the above technical problem according to the technical solutions of the present application. The following specific embodiments can be combined with each other, and for the same or similar concept or process, details may not be described again in some embodiments. The embodiments of the present application will be described hereunder in conjunction with the accompanying drawings.

According to the embodiments of the present application, in one aspect, an embodiment of the present application provides an image table extraction method.

With reference to FIG. 2, it is a flow diagram of an image table extraction method according to an embodiment of the present application.

As shown in FIG. 2, the method includes:
S101, acquiring an image to be processed.

Among them, the executive entity of the image table extraction method according to the embodiment of the present application may be an image table extraction apparatus, and the image table extraction apparatus may be a server (including a local server and a cloud server), a terminal device, a processor, a chip, and so on.

For example, when the image table extraction method according to the embodiment of the present application is applied to the application scenario shown in FIG. 1, the image table extraction apparatus may be a terminal device, and the terminal device may be specifically the desktop computer shown in FIG. 1.

For another example, when the image table extraction method according to the embodiment of the present application is applied to the application scenario shown in FIG. 1, the image table extraction apparatus may be a terminal device, and the terminal device may be specifically a processor provided in the desktop computer shown in FIG. 1, or a chip provided in the desktop computer shown in FIG. 1.

For another example, when the image table extraction method according to the embodiment of the present application is applied to the application scenario shown in FIG. 1, the image table extraction apparatus may a server (not shown in the figure) connected to the desktop computer shown in FIG. 1.

It is worth noting that the above examples are only used to exemplarily illustrate the executive entity of the image table extraction method according to the embodiment of the present application, but cannot be interpreted as a limitation to the executive entity.

Among them, the image to be processed is used to characterize an image including a table in an image format, and is an image that needs to convert the table in the image format into a table in a storage format.

In the embodiment of the present application, a way to acquire the image to be processed is not limited.

In some embodiments, there may be a case that the image table extraction apparatus receives an image to be processed that is input by an object.

For example, the object may be a user terminal (such as a mobile phone, etc.), the image table extraction apparatus may establish a communication connection with the user terminal, and the user transmits the image to be processed to the image table extraction apparatus through the user terminal.

In other embodiments, there may be a case that the image table extraction apparatus collects the image to be processed.

For example, an image collecting apparatus may be provided on the image table extraction apparatus, and the image to be processed may be collected by the image collecting apparatus. Among them, the image collecting apparatus may be a camera, and so on.

S102, generating a table of the image to be processed according to a table extraction model, where the table extraction model is obtained according to a field position feature, an image feature, and a text feature of a sample image.

Among them, the table extraction model may be configured to characterize a neural network model which is generated by training the sample image and which is configured to extract the table in the image, and may be specifically generated according to trainings on three features of the sample image, where the three features are the field position feature, the image feature and the text feature, respectively.

Among them, the field position feature may be configured to characterize a feature generated based on positions of respective fields of the sample image; the image feature may be configured to characterize a feature generated based on an image detection box of the sample image; the text feature may be configured to characterize a feature generated based on text information of the sample image.

In the embodiment of the present application, the field position feature is introduced, and a positional association relationship among respective fields may be determined through the field position feature, for example, a A field is located on the left side of a B field, where the left side may be based on a coordinate system corresponding to the table, and a combination with the image feature and the text feature is made based on the field position feature. Due to a full consideration of positions of respective fields, the image feature and the text feature, it is possible to improve accuracy of table recognition, moreover, it is applicable to an image with a table including at least some dotted line boxes, thereby achieving technical effects of improving flexibility and universality of recognition.

S103, filling text information of the image to be processed into the table.

Among them, a way to fill text information into the table is not limited in the embodiment of the present application.

For example, the text information in the image may be recognized by means of OCR recognition, and the text information obtained through the recognition is copied to the table.

Based on the above analysis, it can be seen that an embodiment of the present application provides an image table extraction method, which includes: acquiring an image to be processed; generating a table of the image to be processed according to a table extraction model, where the table extraction model is obtained according to a field position feature, an image feature, and a text feature of a sample image; and filling text information of the image to be processed into the table. On one hand, a positional association relationship among respective fields may be determined through the field position feature, it is thus applicable to an image with a table having at least some dotted line boxes, thereby achieving technical effects of improving flexibility and universality of table recognition; on the other hand, due to a full consideration of the field position feature, the image feature and the text feature, that is, multiple dimensional features can be obtained through analysis of the image to be processed from multiple dimensions, thereby it is possible to achieve technical effects of improving accuracy and reliability of table recognition.

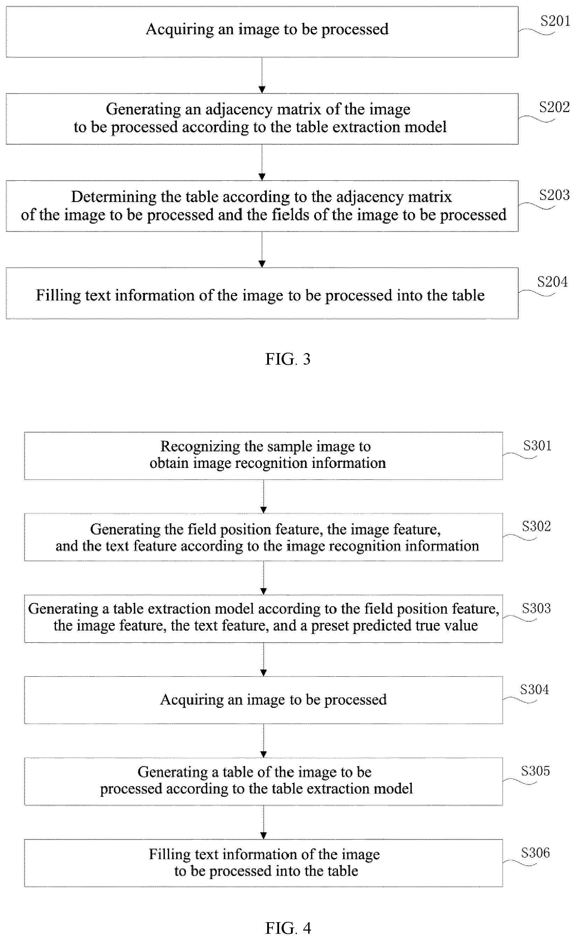

In order to enable readers to more clearly understand the method for generating the table of the image to be processed according to the table extraction model, the image table extraction method according to the embodiment of the present application will be described in detail with reference to FIG. 3. FIG. 3 is a flow diagram of the image table extraction method according to another embodiment of the present application.

As shown in FIG. 3, the method includes:
S201, acquiring an image to be processed.

Among them, for the description of S201, reference may be made to S101, and details will not be described here again.

S202, generating an adjacency matrix of the image to be processed according to the table extraction model.

Among them, the adjacency matrix of the image to be processed is configured to characterize a probability matrix between a row and a column which are formed by fields of the image to be processed.

That is to say, in this step, a possible positional relationship among fields of the image to be processed may be determined, such as the fields that may be located in the same row, the fields that may be located in the same column, and so on.

S203, determining the table according to the adjacency matrix of the image to be processed and the fields of the image to be processed.

Among them, when the adjacency matrix of the image to be processed is obtained, equivalently, a possible positional relationship among fields of the image to be processed is obtained, such as the same row or the same column as described above; moreover, when the possible positional relationship among the fields of the image to be processed is known, the table in the image to be processed may be determined based on the positional relationship and the fields of the image to be processed.

In the embodiment of the present application, by determining the adjacency matrix of the image to be processed, it is possible to avoid dependence on solid lines of a table to achieve a situation where the table may also be generated based on the adjacency matrix when the table is a table with at least some dotted line boxes, thereby achieving extraction of the table with at least some dotted line boxes, that is, technical effects of improving flexibility and universality of table extraction.

In some embodiments, S203 may include:
52031, taking any one of the fields of the image to be processed as a starting point, and extracting a maximal connected graph from the adjacency matrix of the image to be processed.

That is to say, in this step, a starting point may be any field of the image to be processed, and a maximal connected graph may be determined based on any field.

S2032, constructing the table according to the maximal connected graph.

In the embodiment of the present application, by means of constructing the table based on the maximal connected graph, technical effects of improving integrity and comprehensiveness of the table may be achieved.

S204, filling text information of the image to be processed into the table.

Among them, for the description of S204, reference may be made to S103, and details will not be described here again.

In order to enable readers to more clearly understand the method for generating the table extraction model, the image table extraction method according to the embodiment of the present application will be described in detail with reference to FIG. 4. Among them, FIG. 4 is a flow diagram of the image table extraction method according to another embodiment of the present application.

As shown in FIG. 4, the method includes:
S301, recognizing the sample image to obtain image recognition information.

Among them, the number of sample images may be set based on requirements, experience and experiments.

That is to say, the number of sample images is not limited in the embodiment of the present application, and a sample image includes a table.

For example, for a demand of relatively high precision requirements on the table extraction model, a relatively large number of sample images may be selected, while for a demand of relatively low precision requirements on the table extraction model, a relatively small number of sample images may be selected.

It is worth noting that a way to recognize the sample image is not limited in the embodiment of the present application. For example, in some embodiments, an OCR recognition method may be used to recognize the sample image.

Among them, the image recognition information may be configured to characterize attribute information of the sample image obtained through recognition of the sample image, for example, field-related information of the sample image, for another example, text-related information of the sample image, and so on.

S302, generating the field position feature, the image feature, and the text feature according to the image recognition information.

In some embodiments, the generating the field position feature according to the image recognition information may include:
S3021, determining position information of respective fields of the sample image according to the image recognition information.

Among them, the respective fields of the sample image may be regarded as nodes in the sample image, that is, the sample image may be construed as a sample image composed of respective nodes (that is, respective fields).

Based on the above examples, it can be seen that the image recognition information may be configured to characterize field-related information of the sample image, therefore, in this step, the position information of the respective fields of the sample image may be determined based on the image recognition information.

For example, if the sample image is *Fᵢ* ∈ *R*_{*w∗h∗*3'} that is, the sample image is a color image having a width of w, a height of h, and 3 channels, after the sample image is recognized using the OCR recognition method, position information of k fields of the sample image *Fₚ* ∈ *R_{k∗4}* may be obtained, and the position information may be indicated by means of (x top left, y_top_right, x_left_bottom, y_right_bottom), that is, position information of a field at the top left, position information of a field at the top right, position information of a field at the bottom left, and position information of a field at the bottom right.

S3022, performing padding processing on the position information according to a preset node graph to generate the field position feature.

Among them, the node graph is a graph composed of multiple nodes, and its size may be set based on requirements, experience, and experiments. Generally speaking, the node graph is slightly larger than the sample image in terms of size so as to retain all features of the sample image, for example, retain respective nodes in the sample image (that is, respective fields in the sample image).

Based on the above examples, it can be seen that respective fields of the sample image may be construed as respective nodes, equivalently, the sample image overall includes a sample image composed of k nodes.

For example, if the number of nodes in the node graph is v, padding may be performed on *Fₚ* ∈ *R_{k∗4}* by means of padding to obtain *Fₚ* ∈ *R_{v∗4}.* Moreover, in some embodiments, specifically, the padding may be performed by means of zero-padding (Zero-padding).

In the embodiment of the present application, position information of respective fields is determined through the image recognition information so that accuracy of the determined position information may be achieved, moreover, padding processing is performed on the position information of the respective fields to ensure that the respective fields are retained, so that the image recognition information has relatively high reliability and the field position feature has relatively high accuracy, thereby achieving technical effects of stability and accuracy of a subsequently generated table extraction model.

In some embodiments, the generating the image feature according to the image recognition information may include:
extracting the image feature from the image recognition information according to a preset convolutional neural network model.

Based on the above examples, for the sample image *Fᵢ* ∈ *R*_{*w∗h∗*3'} the image feature is extracted through a convolutional neural network model (CNN network model) to obtain a feature graph having a size of M*N*C; according to a size correspondence relationship between the feature graph and the sample image, a detection box having a size of W*H is mapped to a size M*N which is same as the feature graph; and a V*C-dimensional image feature *Fᵢ* ∈ *R_{v∗c}* of corresponding points at a channel level of 1*C is extracted from the feature graph according to a position of a center point of the detection box.

In the embodiment of the present application, the image feature is extracted through the convolutional neural network model. Since the size correspondence relationship is fully considered and the image feature is extracted based on the position of the center point, thereby technical effects of improving reliability and accuracy of the obtained image feature may be achieved.

In some embodiments, the generating the text feature according to the image recognition information may include:
extracting the text feature from the image recognition information according to a preset long short-term memory neural network model and a preset bidirectional cyclic neural network model.

Based on the above examples, it can be seen that respective fields may be construed as respective nodes in the sample image, therefore, in the embodiment of the present application, padding may be performed on the text information in the image recognition information using a padding manner, and the text feature is extracted from the padded text information.

Specifically, based on the above examples, the sample image *Fᵢ* ∈ *R*_{*w∗h∗*3} is recognized, and text information *F_{w}* ∈ *R_{k∗l}* may be obtained, where 1 may be used to characterize a maximum length corresponding to a character in the text information; padding is performed on *F_{w}* ∈ *R_{k∗l}* to obtain *F_{w}* ∈ *R_{v∗l}*; and a V*H-dimensional text feature *F_{c}* ∈ *R_{v∗h}* is obtained through the long short-term memory neural network model and the preset bidirectional cyclic neural network model.

In the embodiment of the present application, technical effects of improving efficiency and accuracy of the text feature may be achieved through the long short-term memory neural network model and the preset bidirectional cyclic neural network model. Moreover, when the text feature is a text feature obtained based on the padding processing, technical effects of improving integrity and comprehensiveness of the text feature may also be achieved, thereby achieving technical effects of a subsequently generated table extraction model with relatively high accuracy.

S303, generating a table extraction model according to the field position feature, the image feature, the text feature, and a preset predicted true value.

In the embodiment of the present application, with combination of three dimensional features of the field position feature, the image feature, and the text features, technical effects of improving reliability and high-precision of the generated table extraction model may be achieved, and with introduction of the field position feature, extraction of a table having at least some dotted line boxes may be achieved, thereby achieving technical effects of flexibility and diversity of table extraction.

In some embodiments, S303 may include:
S3031, performing fusion processing on the field position feature, the image feature, and the text feature to generate information of respective nodes corresponding to the field position feature.

Based on the above examples, it can be seen that the respective fields may be respective nodes in the node graph, therefore, in this step, it is equivalent to fusing the three dimensional features of the field position feature, the image feature, and the text feature to obtain information of respective nodes, that is, the information of respective nodes includes information of three dimensions, which may be indicated using a V*(C+H+4)-dimensional feature matrix.

S3032, generating the table extraction model according to the information of respective nodes and the predicted true value.

In the embodiment of the present application, the three dimensional features of the field position feature, the image feature, and the text feature are fused to obtain information of respective nodes, based on which the table extraction model is generated, and it is equivalent to that the table extraction model includes information of three dimensions. Therefore, technical effects of improving accuracy and reliability of the table extraction model may be achieved.

In some embodiments, S3032 may include:
S30321, generating an adjacency matrix according to the information of respective nodes.

Among them, based on the above examples, it can be seen that the adjacency matrix is configured to characterize a probability matrix between a row and a column which are formed by the respective nodes.

In some embodiments, S30321 may include:
S303211, performing correlation processing on the information of respective nodes.

Among them, the correlation processing may be configured to characterize that a correlation between respective nodes by means of feature vectors is performed to obtain a V*S-dimensional incidence matrix, and any one of the respective nodes can be indicated by a S-dimensional feature vector *Fₙ* ∈ *R_{v∗s}*.

That is to say, the information of respective nodes may be construed as feature vectors of the respective nodes, before the correlation processing is performed, the feature vectors of the respective nodes are independent (which may be construed as a global feature vector); while after the correlation processing is performed, local feature vectors of the respective nodes can be obtained. That is, after the correlation processing is performed, the obtained information of the respective nodes includes the global feature vector and the local feature vectors.

For example, for any node *Nᵢ,* k (k may be 20) nodes with nearest distances may be found through nearest neighbor algorithm (k-NearestNeighbor, kNN), and distances of the k points are sorted in an ascending order to obtain *N*_{*i*1},*N*_{*i*2}, ..., *Nᵢₖ*; calculate feature vectors of k edges in sequence, that is, local feature vectors of *Nᵢ*: *N*_{*i*1} - *Nᵢ*, *N*_{*i*2} - *Nᵢ*, ...,*Nᵢₖ* - *Nᵢ*; add a global feature vector to the feature of each edge to obtain corresponding k feature vectors: (*Nᵢ*, *N*_{*i*1} - *Nᵢ*), (*Nᵢ, N*_{*i*2} - *Nᵢ*),..., (*Nᵢ,Nᵢₖ* -*Nᵢ*); a shared network may be used to update each feature vector obtained above (for example, updating with a fully connected layer *h*_{Θ}) to obtain: *h*_{Θ} *(Nᵢ, N*_{*i*1} *- Nᵢ), h*_{Θ} *(Nᵢ, N*_{*i*2} - *Nᵢ),..., h*_{Θ} *(Nᵢ, Nᵢₖ* - *Nᵢ*); by means of max pooling, the above k feature vectors may be combined into one feature vector as a new feature vector of the node *Nᵢ.*

S303212, performing pairwise sampling processing on the information of respective nodes after performing the correlation processing, and generating an edge feature matrix of the respective nodes.

It is worth noting that the table extraction model may be construed as determining an association relationship among respective fields, that is, an association relationship among respective nodes, and the association relationship among the respective nodes may be indicated by an edge. Therefore, in this step, an edge feature matrix of the respective nodes may be generated through pairwise sampling processing (Pairwise Sampling).

For example, for an edge *E*₁₂ of a node *V*₁→a node *V*₂, it may be formed by stitching a 1*S-dimensional feature vector of the node *V*₁ and a 1*S-dimensional feature vector of the node *V*₂, *E*₁₂ = *V*₁ | | *V*₂, that is, *E*₁₂ ∈ *R*_{1∗2}*_{S},* and finally a V*V*2S-dimensional edge feature matrix may be obtained.

S303213, generating the adjacency matrix corresponding to the edge feature matrix according to a preset fully connected network model.

Based on the above examples, for the V*V*2S-dimensional edge feature matrix, each relationship is performed with feature learning via a three-layer fully connected network model. In practice, the output dimensions of the three-layer fully connected network model are respectively 128, 64, 1, the last layer is activated with a sigmoid function to output a matrix of V*V*1. An element *Pᵢⱼ* in the matrix may be used to characterize a probability value that there is an edge connection between a node i and a node j, and finally two probability matrices (that is, adjacency matrices) are obtained: *P_{rows}* ∈ *R*_{*v∗v∗*1} (a row probability matrix), and *P_{cols}* ∈ *R*_{*v∗v∗*1} (a column probability matrix).

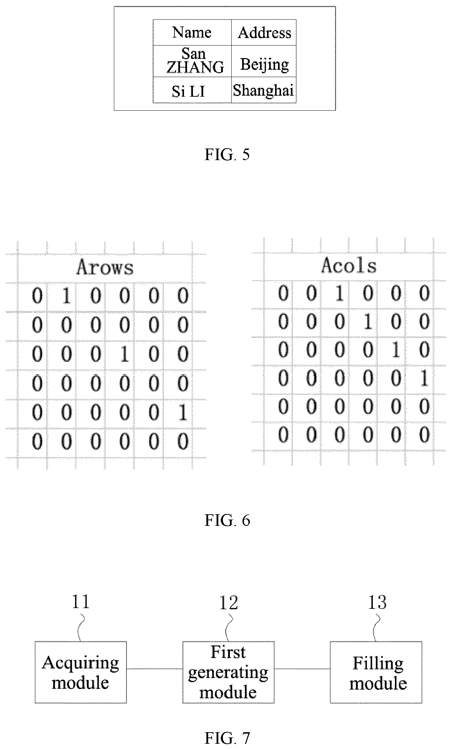

For example, if the sample image is as shown in FIG. 5, the two probability matrices obtained can be seen in FIG. 6.

In the embodiment of the present application, correlation processing is performed on the information of respective nodes, reliability of an association relationship among the respective nodes may be improved, thereby achieving technical effects of assuring, when an edge feature matrix is generated, comprehensiveness and accuracy of the generated edge feature matrix, and of generating an adjacency matrix with high reliability and accuracy.

S30322, generating the table extraction model according to the adjacency matrix and the predicted true value.

Among them, the adjacency matrix is a test value, the predicted true value is an actual value, and the table extraction model may be generated through the test value (that is, the adjacency matrix) and the actual value (that is, the predicted true value).

Specifically, a cross entropy loss between the test value (that is, the adjacency matrix) and the actual value (that is, the predicted true value) may be calculated, and a parameter of the table extraction model may be constantly optimized according to the cross entropy loss. When the cross entropy loss between the test value (that is, the adjacency matrix) and the actual value (that is, the predicted true value) is less than a preset threshold, the optimization of the parameter is completed, and a table extraction model with relatively high precision may be generated.

In the embodiment of the present application, an adjacency matrix is generated according to the information of respective nodes, due to a full consideration of information of respective dimensions (that is, information corresponding to the above three dimensional features), technical effects of improving comprehensiveness and integrity of the adjacency matrix may be achieved, especially when the parameter of the table extraction model is constantly optimized based on an iterative approach, technical effects of improving accuracy and reliability of the table extraction model may be achieved.

S304, acquiring an image to be processed.

Among them, for the description of S304, reference may be made to S101, and details will not be described here again.

S305, generating a table of the image to be processed according to the table extraction model.

Among them, for the description of S305, reference may be made to S102 or to S202 and S203, and details will not be described here again.

S306, filling text information of the image to be processed into the table.

Among them, for the description of S306, reference may be made to S103, and details will not be described here again.

According to the embodiments of the present application, in another aspect, an embodiment of the present application also provides an image table extraction apparatus for performing the method described in any of the above embodiments, for example, performing the method in any one of the embodiments as shown in FIG. 2 to FIG. 4.

With reference to FIG. 7, it is a schematic diagram of an image table extraction apparatus according to an embodiment of the present application.

As shown in FIG. 7, the apparatus includes:
an acquiring module 11, configured to acquire an image to be processed;
a first generating module 12, configured to generate a table of the image to be processed according to a table extraction model, where the table extraction model is obtained according to a field position feature, an image feature, and a text feature of a sample image; and
a filling module 13, configured to fill text information of the image to be processed into the table.

In some embodiments, the first generating module 12 is configured to: generate an adjacency matrix of the image to be processed according to the table extraction model, where the adjacency matrix of the image to be processed is configured to characterize a probability matrix between a row and a column which are formed by fields of the image to be processed; and determine the table according to the adjacency matrix of the image to be processed and the fields of the image to be processed.

In some embodiments, the first generating module 12 is configured to: take any one of the fields of the image to be processed as a starting point, and extract a maximal connected graph from the adjacency matrix of the image to be processed; and construct the table according to the maximal connected graph.

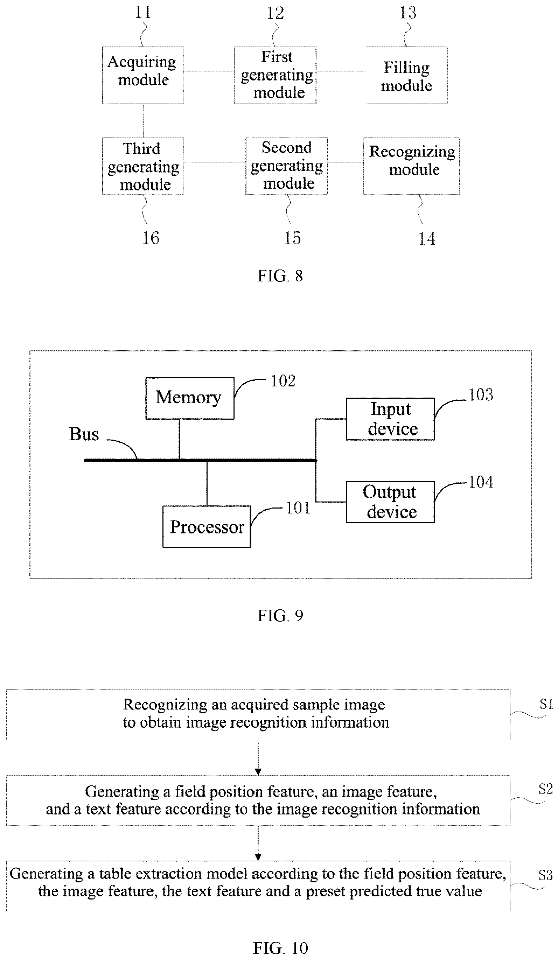

In conjunction with FIG. 8, it can be seen that, in some embodiments, the apparatus further includes:
a recognizing module 14, configured to recognize the sample image to obtain image recognition information;
a second generating module 15, configured to generate the field position feature, the image feature, and the text feature according to the image recognition information; and
a third generating module 16, configured to generate the table extraction model according to the field position feature, the image feature, the text feature, and a preset predicted true value.

In some embodiments, the third generating module 16 is configured to: perform fusion processing on the field position feature, the image feature, and the text feature to generate information of respective nodes corresponding to the field position feature, where the respective nodes are configured to characterize respective fields in the sample image; and generate the table extraction model according to the information of respective nodes and the predicted true value.

In some embodiments, the third generating module 16 is configured to: generate an adjacency matrix according to the information of respective nodes, where the adjacency matrix is configured to characterize a probability matrix between a row and a column which are formed by the respective nodes; and generate the table extraction model according to the adjacency matrix and the predicted true value.

In some embodiments, the third generating module 16 is configured to: perform correlation processing on the information of respective nodes; perform pairwise sampling processing on the information of respective nodes after performing the correlation processing, and generate an edge feature matrix of the respective nodes; and generate the adjacency matrix corresponding to the edge feature matrix according to a preset fully connected network model.

In some embodiments, the second generating module 15 is configured to: determine position information of respective fields of the sample image according to the image recognition information; and perform padding processing on the position information according to a preset node graph to generate the field position feature.

In some embodiments, the second generating module 15 is configured to extract the image feature from the image recognition information according to a preset convolutional neural network model.

In some embodiments, the second generating module 15 is configured to extract the text feature from the image recognition information according to a preset long short-term memory neural network model and a preset bidirectional cyclic neural network model.

According to embodiments of the present application, the present application further provides an electronic device and a readable storage medium.

With reference to FIG. 9, it is a block diagram of an electronic device provided by an embodiment of the present application.

Among them, the electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, their connections and relationships, and their functions are merely as examples, and are not intended to limit implementations in the embodiments of the present application described and/or claimed herein.

As shown in FIG. 9, the electronic device includes: one or more processors 101, a memory 102, and an interface for connecting various components, including a high-speed interface and a low-speed interface. The various components are connected to each other via different buses, and can be installed on a public motherboard or installed in other ways as desired. The processor may process instructions executed within the electronic device, including instructions that stored in or on the memory to display GUI graphical information on an external input/output apparatus (such as a display device coupled to the interface). In other embodiments, multiple processors and/or multiple buses can be used together with multiple memories, if desired. Similarly, multiple electronic devices can be connected, and each device provides some necessary operations (for example, as a server array, a group of blade servers, or a multi-processor system). In FIG. 9, one processor 101 is used as an example.

The memory 102 is a non-transitory computer readable storage medium provided in an embodiment of the present application. Among them, the memory is stored with instructions executable by at least one processor, enabling the at least one processor to execute the image table extraction method provided by the embodiment of the present application. The non-transitory computer readable storage medium of the embodiment of the present application is stored with computer instructions, which are configured to enable a computer to execute the image table extraction method provided by the embodiment of the present application.

As a kind of non-transitory computer readable storage medium, the memory 102 may be configured to store non-transitory software programs, non-transitory computer executable programs and modules, such as program instructions/modules in the embodiments of the present application. The processor 101 executes various functional applications and data processing of the server by running the non-transitory software programs, instructions, and modules stored in the memory 102, thereby achieving the image table extraction method the above method embodiments.

The memory 102 may include a program storage area and a data storage area, where the program storage area may be stored with an operating system and an application program required by at least one function, the data storage area may be stored with data created according to use of the electronic device, and so on. In addition, the memory 102 may include a high-speed random access memory, and may also include a non-transitory memory, such as at least one magnetic disk storage device, a flash memory device, or other non-transitory solid-state storage devices. In some embodiments, the memory 102 optionally includes memories remotely arranged relative to the processor 101, and these remote memories can be connected to the electronic device through a network. Examples of the above network include, but are not limited to, Internet, an intranet, a local area network, a block-chain-based service network (Block-chain-based Service Network, BSN), a mobile communication network, and a combination thereof.

The electronic device may also include: an input apparatus 103 and an output apparatus 104. The processor 101, the memory 102, the input apparatus 103 and the output apparatus 104 can be connected by a bus or in other ways. In FIG. 9, connections via buses are used as an example.

The input apparatus 103 may receive input digital or character information, and generate key signal input related to user settings and function control of the electronic device, such as a touch screen, a keypad, a mouse, a trackpad, a touchpad, an indicator bar, one or more mouse buttons, a trackball, a joystick and other input apparatuses. The output apparatus 104 may include a display device, an auxiliary lighting apparatus (e. g., an LED), a tactile feedback apparatus (e. g., a vibration motor), and so on. The display device may include, but is not limited to, a liquid crystal display (LCD), a light emitting diode (LED) display, and a plasma display. In some implementations, the display device may be the touch screen.

Various implementations of the system and the technique described here may be implemented in a digital electronic circuit system, an integrated circuit system, an ASIC (application specific integrated circuit), computer hardware, firmware, software, and/or a combination thereof. These various implementations may include: implementations implemented in one or more computer programs, where the one or more computer programs may be executed and/or interpreted on a programmable system including at least one programmable processor, and the programmable processor may be a dedicated or generic programmable processor, which may receive data and instructions from a storage system, at least one input apparatus and at least one output apparatus, and transmit the data and the instructions to the storage system, the at least one input apparatus and the at least one output apparatus.

These computer programs (also known as programs, software, software applications, or codes) include machine instructions of the programmable processor, and may be implemented using a high-level process and/or an object-oriented programming language, and/or an assembly/machine language. As used herein, the terms "machine readable medium" and "computer readable medium" refer to any computer program product, device, and/or apparatus (e.g., a magnetic disk, an optical disk, a memory, a programmable logic device (PLD)) configured to provide machine instructions and/or data to the programmable processor, including a machine readable medium that receives machine instructions as machine readable signals. The term "machine readable signal" refers to any signal configured to provide machine instructions and/or data to the programmable processor.

For provision of interaction with a user, the system and the technique described herein may be implemented on a computer, and the computer has: a display device for displaying information to the user (such as a CRT (cathode ray tube) or an LCD (liquid crystal display) monitor); and a keyboard and a pointing apparatus (such as a mouse or a trackball), the user may provide an input to the computer through the keyboard and the pointing apparatus. Other kinds of apparatuses may also be used to provide the interaction with the user; for example, feedback provided to the user may be any form of sensor feedback (e.g., visual feedback, auditory feedback, or tactile feedback); and may receive the input from the user in any form (including an acoustic input, a voice input, or a tactile input).

The system and the technique described herein may be implemented in a computing system that includes back-end components (for example, as a data server), or a computing system that includes intermediate components (for example, an application server), or a computing system that includes front-end components (for example, a user computer with a graphical user interface or a web browser through which the user may interact with the implementations of the systems and the techniques described herein), or a computing system that includes any combination of the back-end components, the intermediate components, or the front-end components. The components of the system may be interconnected by any form or medium of digital data communications (e.g., a communication network). Examples of the communication network include: a local area network (LAN), a block-chain-based service network (Block-chain-based Service Network, BSN), a wide area network (WAN), and Internet.

The computer system may include a client and a server. The client and the server are generally far away from each other, and generally interact with each other through the communication network. A relationship between the client and the server is generated by computer programs running on a corresponding computer and having a client-server relationship for each other.

According to embodiments of the present application, in another aspect, an embodiment of the present application further provides a training method for a table extraction module.

With reference to FIG. 10, it is a flow diagram of a training method for a table extraction model according to an embodiment of the present application.

As shown in FIG. 10, the method includes:
S1, recognizing an acquired sample image to obtain image recognition information, where the sample image includes a table.
S2, generating a field position feature, an image feature, and a text feature according to the image recognition information.
S3, generating a table extraction model according to the field position feature, the image feature, the text feature and a preset predicted true value.

It should be understood that the various forms of procedures shown above can be used, and reordering, addition, or deletion of the step can be performed. For example, the steps recorded in the present application can be performed concurrently, sequentially, or in different orders, provided that desirable results of the technical solutions in the present application could be achieved, and there is no limitation herein.

The above specific embodiments do not constitute a limitation on the protection scope of the present application. Those skilled in the art should understand that various modifications, combinations, sub-combinations, and replacements can be made according to design requirements and other factors. Any modification, equivalent replacement and improvement, etc., made within the spirit and principle of the present application shall be included in the protection scope of the present application.

## Claims

1. An image table extraction method, comprising:
acquiring (S101) an image to be processed;
generating (S102) a table of the image to be processed according to a table extraction model, wherein the table extraction model is obtained according to a field position feature, an image feature, and a text feature of a sample image; and
filling (S103) text information of the image to be processed into the table.

2. The method according to claim 1, wherein the generating (S102) a table of the image to be processed according to a table extraction model comprises:
generating (S202) an adjacency matrix of the image to be processed according to the table extraction model, wherein the adjacency matrix of the image to be processed is configured to characterize a probability matrix between a row and a column which are formed by fields of the image to be processed; and
determining (S203) the table according to the adjacency matrix of the image to be processed and the fields of the image to be processed.

3. The method according to claim 2, wherein the determining (S203) the table according to the adjacency matrix of the image to be processed and the fields of the image to be processed comprises:
taking any one of the fields of the image to be processed as a starting point, and extracting a maximal connected graph from the adjacency matrix of the image to be processed; and
constructing the table according to the maximal connected graph.

4. The method according to any one of claims 1 to 3, further comprising:
recognizing (S301) the sample image to obtain image recognition information;
generating (S302) the field position feature, the image feature, and the text feature according to the image recognition information; and
generating (S303) the table extraction model according to the field position feature, the image feature, the text feature, and a preset predicted true value.

5. The method according to claim 4, wherein the generating (S303) the table extraction model according to the field position feature, the image feature, the text feature, and a preset predicted true value comprises:
performing fusion processing on the field position feature, the image feature, and the text feature to generate information of respective nodes corresponding to the field position feature, wherein the respective nodes are configured to characterize respective fields in the sample image; and
generating the table extraction model according to the information of respective nodes and the predicted true value.

6. The method according to claim 5, wherein the generating the table extraction model according to the information of respective nodes and the predicted true value comprises:
generating an adjacency matrix according to the information of respective nodes, wherein the adjacency matrix is configured to characterize a probability matrix between a row and a column which are formed by the respective nodes; and
generating the table extraction model according to the adjacency matrix and the predicted true value.

7. The method according to claim 6, wherein the generating an adjacency matrix according to the information of respective nodes comprises:
performing correlation processing on the information of respective nodes;
performing pairwise sampling processing on the information of respective nodes after performing the correlation processing, and generating an edge feature matrix of the respective nodes; and
generating the adjacency matrix corresponding to the edge feature matrix according to a preset fully connected network model.

8. The method according to claim 4, wherein generating (S302) the field position feature according to the image recognition information comprises:
determining position information of respective fields of the sample image according to the image recognition information; and
performing padding processing on the position information according to a preset node graph to generate the field position feature.

9. The method according to claim 4, wherein generating (S302) the image feature according to the image recognition information comprises:
extracting the image feature from the image recognition information according to a preset convolutional neural network model.

10. The method according to claim 4, wherein generating (S302) the text feature according to the image recognition information comprises:
extracting the text feature from the image recognition information according to a preset long short-term memory neural network model and a preset bidirectional cyclic neural network model.

11. An image table extraction apparatus, comprising:
an acquiring module (11), configured to acquire an image to be processed;
a first generating module (12), configured to generate a table of the image to be processed according to a table extraction model, wherein the table extraction model is obtained according to a field position feature, an image feature, and a text feature of a sample image; and
a filling module (13), configured to fill text information of the image to be processed into the table.

12. The apparatus according to claim 11, wherein the first generating module (12) is configured to: generate an adjacency matrix of the image to be processed according to the table extraction model, wherein the adjacency matrix of the image to be processed is configured to characterize a probability matrix between a row and a column which are formed by fields of the image to be processed; and determine the table according to the adjacency matrix of the image to be processed and the fields of the image to be processed.

13. The apparatus according to claim 12, wherein the first generating module (12) is configured to: take any one of the fields of the image to be processed as a starting point, and extract a maximal connected graph from the adjacency matrix of the image to be processed; and construct the table according to the maximal connected graph.

14. A non-transitory computer readable storage medium stored with a computer instruction, wherein the computer instruction is configured to enable a computer to execute the method according to any one of claims 1 to 10.

15. A training method for a table extraction module, comprising:
recognizing (S1) an acquired sample image to obtain image recognition information, wherein the sample image comprises a table;
generating (S2) a field position feature, an image feature, and a text feature according to the image recognition information; and
generating (S3) a table extraction model according to the field position feature, the image feature, the text feature and a preset predicted true value.
